(19) Europäisches Patentamt / European Patent Office / Office européen des brevets

(11) **EP 2 073 579 A1**

(12) **EUROPEAN PATENT APPLICATION**

(43) Date of publication:
24.06.2009 Bulletin 2009/26

(51) Int Cl.:
*H04W 4/00* (2009.01)

(21) Application number: 07425819.5

(22) Date of filing: 21.12.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(71) Applicants:
• Nokia Siemens Networks S.p.A.
20126 Milano (IT)
• Nokia Siemens Networks Oy
02610 Espoo (FI)

(72) Inventors:
• Tortora, Daniele
20099 Sesto San Giovanni (MI) (IT)
• Rastelli, Marco
20090 Cesano Boscone (IT)

(74) Representative: Fischer, Michael
Nokia Siemens Networks GmbH & Co. KG
Intellectual Property Rights
P.O. Box 80 17 60
81617 München (DE)

(54) **Method and systems for handling handover processes in cellular communication networks, corresponding network and computer program product**

(57)    Handover processes a communication network including mobile stations (MS) and base stations (BS1, ... , BS6) serving said mobile stations via cells, wherein a selected mobile station (MS) is handed over from a current serving cell to a selected target cell, involve at least one of:
- selecting the mobile stations (MS) and target cells (BS1, ... , BS6) for handover as a function of combined cell load information from the cells (BS1, ... , BS6) and channel quality measurements from the mobile stations (MS); and
- allowing handover even if handover results in a degradation in terms of Modulation and Coding Scheme of Quality of Service after handover provided the resulting degradation is within a maximum allowed degradation.

Fig. 2

## Description

Field of the invention

This disclosure relates to handling handover processes in cellular communication networks.

Any of a Mobile Wireless Broadband Access network conforming to IEEE std 802.16-2004 as amended by IEEE 802.16e-2005 and corrected by IEEE 802.16-2004 Corrigendum 2, a Mobile Wireless Broadband Access network conforming to IEEE 802.16Rev2 or the WiMAX Forum specifications (i.e. Stage 2 and Stage 3 specifications) may be exemplary of networks to which the instant disclosure may apply.

Reference to this prospected, possible application is not however to be construed in a limiting sense of the scope of this disclosure.

Description of the related art

A general description of the features of the networks referred to in the foregoing can be found, i.a. in:

- IEEE Computer Society and IEEE Microwave Theory and Techniques Society, "IEEE Standard for Local and Metropolitan Area Networks Part 16: Air Interface for Fixed Broadband Wireless Access Systems", IEEE Std 802.16-2004 (Revision of IEEE Std 802.16-2001), 1 October 2004;
- IEEE Computer Society and IEEE Microwave Theory and Techniques Society, "IEEE Standard for Local and Metropolitan Area Networks Part 16: Air Interface for Fixed and Mobile Broadband Wireless Access Systems" Amendment 2: Physical and Medium Access Control Layers for Combined Fixed and Mobile Operation in Licensed Bands and Corrigendum 1, IEEE Std 802.16e™-2005 and IEEE Std 802.16™-2004/Cor1-2005 (Amendment and Corrigendum to IEEE Std 802.16-2004) 28 February 2006;
- IEEE Computer Society and IEEE Microwave Theory and Techniques Society, "Draft Standard for Local and metropolitan area networks Part 16: Air Interface for Fixed and Mobile Broadband Wireless Access SystemsCorrigendum 2";
- IEEE Computer Society and IEEE Microwave Theory and Techniques Society, "DRAFT Standard for Local and Metropolitan Area Networks Part 16: Air Interface for Broadband Wireless Access Systems", P802.16Rev2/D1 (October 2007) Revision of IEEE Std 802.16-2004 as amended by IEEE Std 802.16f-2005 and IEEE Std 802.16e-2005;
- Wimax Forum Network Architecture Stage 3 (Detailed Protocols and Procedures), Release 1.1.1, September 14, 2007.

Selecting target Base Stations (BSs) and Mobile Stations (MSs) for handover may be a key issue in ensuring proper operation of communication networks as considered in the foregoing, and the topic of a handover due to traffic load is well-known topic in that area.

Similarly, handover features like estimating traffic rate and channel quality in the target cell and comparing them with predefined threshold values (taking into account margins to the source cell) are well known in the art.

For instance, document US-B-6 363 252 discloses an arrangement wherein, given a MS candidate for handover, the most suitable target BS is selected which maximizes a CINR/Cell_Load ratio, so that a MS close to a cell edge is moved to another cell.

Also, handover due to traffic load is supported by a number of current commercial technologies such as the NSN GSM BSC "Traffic handover" algorithm, or the Motorola BSC "Congestion Relief handover".

If a layered network scenario with overlapping cell coverage areas is considered, the fact may need to be taken into account that a Mobile Station (MS) in a given geographical location may receive a radio signal from multiple overlapping cells. Traffic distribution across overlapping cells may thus depend on several factors such as traffic fluctuation, MS cell selection and re-selection process, handover and Radio Resource Management procedures.

Object and summary of the invention

The Applicant has noted that, while making use of measurements such as e.g. CINR (Channel to Interference plus Noise Ratio) and Cell Load in order to take a handover decision, prior art solutions serve purposes, conform to criteria and lead to effects of the handover mechanism which may not be completely satisfactory in certain contexts.

Also, current commercial technologies supporting handover due to traffic load are based on different methods for selecting target cells and candidate MS for handover such as e.g. sorting cells according to power budget criteria, which do not take into account target cell load or interference in the selection process.

Interestingly, the problem of providing a proper handover function does not appear having been tackled yet in the Mobile WiMAX community, also in view of the current early development phase of this technology. For instance, no mention is made in the corresponding standards of handover in layered networks, Overlay/Underlay Cells, Hierarchical Cell Structures, etc.

In a layered network scenario, larger cells are used to provide geographical coverage (coverage cells) while smaller cells provide extra capacity (capacity cells), with overlapping cell coverage areas. Network resource management (e.g. Load Balancing) and handover in particular may be used to unload inasmuch as possible the coverage cells while moving traffic to the capacity cells. A target pursued may be to unload the coverage cells in order to improve Grade of Service (i.e. make available coverage cells resources so that calls outside the capacity layer coverage do not get blocked) and Spectrum Efficiency (by effectively utilizing capacity layers carriers). On the other hand, after connection has been moved to a capacity cell, user throughput may be reduced due to worse radio channel conditions respect to coverage cells. A trade-off has to be achieved between system performance (GoS and SE) and user performance (user throughput).

Similar problems may arise in GERAN and in UTRAN in case of Overlay/Underlay cell structures and Hierarchical Cell Structure. In those domains, the need is still felt for solutions that may be truly effective in achieving an optimal trade-off between system performance and user performance in Layered Networks (e.g. Underlay/Overlay).

In fact, existing solutions may be based on a comparison of certain channel quality metrics - e.g. CINR (Channel to Interference plus Noise Ratio) or RSSI (Received Signal Strength Indicator) - with an absolute or relative threshold (TRH). For instance, handover from Overlay to Underlay may be triggered when received CINR > THR or received RSSI > THR, without taking into account the user and system throughput degradation due to handover.

The object of the invention is thus to provide a fully satisfactory solution to the drawbacks and the needs still felt as discussed in the foregoing.

According to the present invention, that object is achieved by means of a method having the features set forth in the claims that follow. The invention also relates to a corresponding system, a related network as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is intended to highlight the possibility for the present invention to be implemented in a distributed/ modular fashion.

The claims are an integral part of the disclosure of the invention provided herein.

In an embodiment, given a Base Station in high load conditions, Mobile Station (MS) and Base Station (BS) selection for traffic handover involves the selection of a most suitable pair of MS and target BS for handover based on the minimization of a "cost" function associated to handover. In an embodiment, the handover cost is a function of channel degradation and system load, so that the MS associated to the lowest cost MS is moved to another cell, irrespective of its position in the current serving cell.

In an embodiment, the handover mechanism is based i.a. on a maximum allowed channel degradation, which is well applicable, for example, to a Mobile WiMAX system. Certain embodiments may involve associating non-integer values to the MCS (Modulation and Coding Scheme); this makes it possible to distinguish between the two situations and take a proper decision by taking into account MCS degradation in an easy and effective way.

The ability to support the handover decision by properly using the Modulation and Coding Scheme (MCS) - as used or estimated for a certain connection - makes it possible to provide a direct measurement of the system Spectral Efficiency achievable for the connection in the Serving or Target BS. The MCS value defines how many bits can be loaded on a given radio resource (e.g. OFDMA slot). Basing the handover decision on the allowed MCS degradation provides a simple and effective way to reach a trade-off between the overall system capacity (by loading capacity cells) and Spectral Efficiency (the MCS used, which is expectedly lower in the capacity cell). This handover mechanism based on MCS degradation may be a definite asset in a layered network scenario with overlapping cell coverage areas: this is a scenario where a Mobile Station (MS) in a given geographical location may receive a radio signal from multiple overlapping cells and traffic distribution across overlapping cells may depend on several factors such as traffic fluctuation, MS cell selection and re-selection process, handover and Radio Resource Management procedures, while in some circumstances traffic load may not be optimally distributed across overlapping cells so that redistributing traffic by triggering handover is beneficial.

This is to be appreciated in contrast with handover based on the comparison with CINR thresholds or RSSI thresholds. A given CINR or RSSI value usually corresponds to different MCSs, depending on the environment type (urban, rural), on the user speed and on the PHY layer features enabled in the cell. For instance a slow moving user will be able to use high efficiency MCS if Adaptive Modulation and Coding (AMC) permutation zone is available in the target cell, while for a fast moving user this particular is not relevant. For instance, in the case of a fast moving user, it may be beneficial, with a view to reducing the number of handover events, to let this user "reside" in the coverage cell.

An embodiment properly selects the candidate MSs for handover by addressing the issue of MS and target BS selection by combining cell load information from target cells and channel quality measurements from MSs. Traffic load across overlapping cells may be redistributed in such a way to avoid that cells get overloaded due to traffic reasons, and MSs for the handover may be selected in order to optimize radio link quality statistics. In an embodiment, larger cells are used to provide geographical coverage (coverage cells) while smaller cells provide extra capacity (capacity cells). Network resource management (e.g. Load Balancing) and handover mechanism in particular may be used to unload as much as possible the coverage cells and to move traffic on the capacity cells.

An embodiment takes into account that, after connection has been moved to a capacity cell, user throughput may be reduced due to worse radio channel conditions respect to coverage cells. A trade-off may thus be achieved between system performance and user performance. A mechanism to achieve this trade-off may be based on the concept of maximum allowed channel degradation. In an embodiment, this mechanism foresees two handover types, namely a "Sufficient QoS handover" based on an estimation of Modulation and Coding Scheme (MCS) and Service Flow Traffic Rate (that may be provided after handover) and "Insufficient QoS handover". An embodiment allows to distribute the traffic load across overlapping cells in such a way to avoid that cells get overloaded due to traffic reasons. Equalization of traffic load distribution across cells allows effective utilization of network resources. The MSs for the handover are selected in such a way to optimize radio link quality statistics.

In an embodiment, the handover method allows finding a trade-off between channel quality of a single MS and the system spectrum efficiency and Grade of Service by exploiting a configurable parameter to ensure that throughput degradation of connections moved from coverage cells to capacity cells is within a certain limit. An embodiment guarantees that valuable radio resources of the coverage cells are used only when really needed; in that way, the capacity layer can be optimally exploited also for Best Effort (BE) services, without degrading overall system capacity.

Brief description of the annexed drawings

The invention will now be described, by way of example only, with reference to the enclosed figures of drawing, wherein:

- Figure 1 is exemplary of constructing a list of candidate Mobile Stations for handover as described herein,
- Figure 2 is exemplary of selecting a candidate Mobile Station and a target Base Station as described herein,
- Figure 3 is a flow chart associated with the operations represented in figures 1 and 2, and
- Figure 4 is exemplary of a handover process within the framework of the arrangement described herein.

Detailed description of exemplary embodiments

In the following description, numerous specific details are given to provide a thorough understanding of embodiments. The embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

While certain networks may provide for a single base station supporting plural cells (e.g. in different spatial regions or sectors) and/or a single cell being supported by plural base stations (e.g. with "repeater" base stations), throughout this description the terms "base station" and "cell" are used interchangeably, under the assumption (made for the sake of simplicity) that each base station serves one respective cell.

As considered herein, handover (HO) involves a mobile station being transferred from a current serving cell to a target cell.

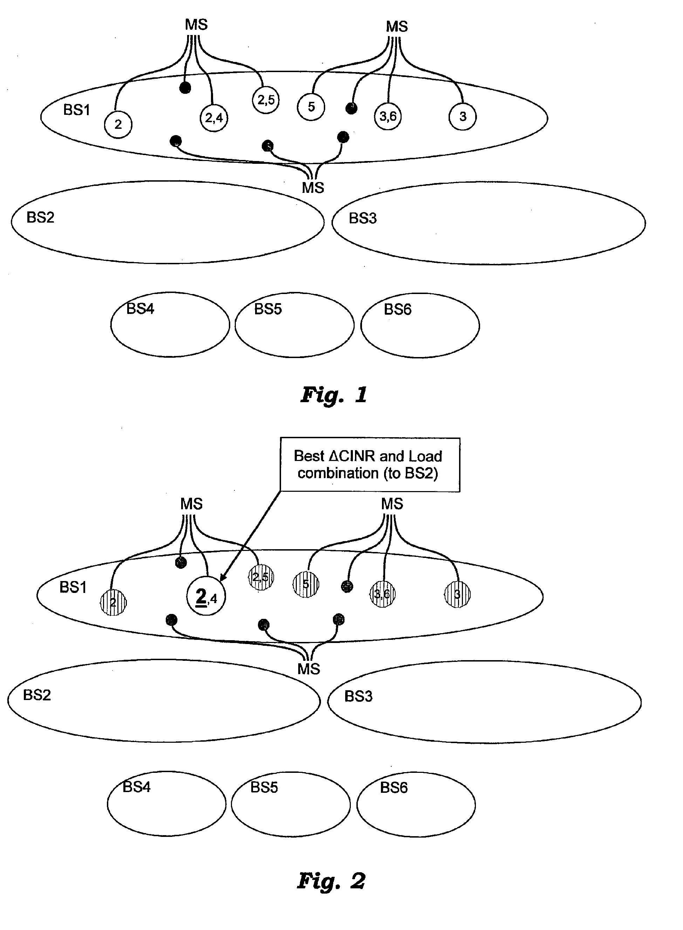

As indicated, this disclosure aims i.a. at solving the problem of MS and target BS selection by combining cell load information from target cells and channel quality measurements from MSs. The selection process may start when conditions for initiation of handover (HO) due to traffic load are met, e.g. in case the radio resource utilization of the cell exceeds a certain threshold. For instance, Figure 1 refers to a network (e.g. of any of the types listed in the introduction to this disclosure) wherein a plurality of Base Stations BS1, BS2, ...., BS6 may serve, via respective cells, a plurality of Mobile Stations (MS). In the exemplary embodiment described herein, two configurable cell parameters are considered, which may define the minimum acceptable radio channel quality value in the target cells:

DL_Ngb_RSSI_min_Trf_HO, and

DL_Ngb_CINR_min_Trf_HO

Candidate MS list construction

Candidate MSs are those MSs for which measurements of target cell channel quality are available at the time the candidate MS list construction process starts.

As indicated, two exemplary options may exist for channel quality metrics, namely CINR (Channel to Interference plus Noise Ratio) or RSSI (Received Signal Strength Indicator). A configurable parameter can be used to define the selected metric.

For instance, in Figure 1, non candidate MSs are shown as dark circular areas, while candidate MSs are shown as clear circles having inscribed therein the numbers of the potential target BSs. For instance "2,4" will identify BS1 and BS4 as potential target BSs.

The Candidate MS list may include those MSs exhibiting channel quality measurements in excess of a minimum acceptable radio channel quality value, i.e. those MSs for which the following condition holds:

Metric (Target BS(n), MS(m)) > DL_Ngb_XX_min_Trf_ HO,

where:

Metric = CINR or RSSI, depending on the selected report metric; and

XX = CINR or RSSI, depending on selected report metric.

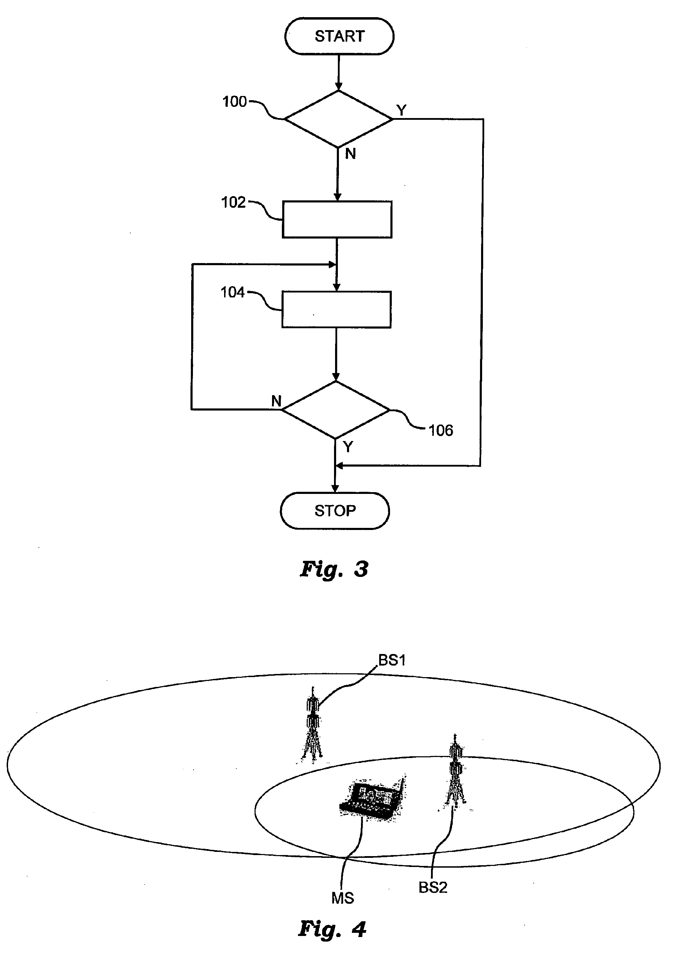

If the candidate MS list is not empty (which is checked in a step 100 of the exemplary flow chart of Figure 3), the MS selection process starts.

In case the candidate MS list is empty (positive outcome of step 100), handover due to the traffic load distribution procedure terminates.

### MS and target BS selection process

This disclosure introduces an original cost function that allows to take into account both radio channel link quality modification due to handover and traffic load at the target cell. Radio channel link quality can either degrade or improve after handover depending on whether the sign of the difference:

Metric(Serving BS, MS(m))- Metric (Target BS(n), MS(m))
is positive or negative.

The MS and BS selection process starts in a step 102 with the evaluation of the cost function Cost(m, n) for all candidate MSs and target BSs:

Cost(m, n) =
((Metric(Serving BS, MS(m)) - Metric (Target BS(n), MS(m))) x Cell Load (Target BS(n)),

where:

m =           MS index,
n =           target BS index;
Metric =      CINR or RSSI, depending on selected report metric;
Cell Load =   percentage of Radio Resource utilization at the target BS.

The Cell Load may be derived from the Available Radio Resource TLV in RRM Spare capacity report message of Stage 3 specification cited in the introductory portion of this description.

The j-th MS (MS j) and the k-th Target BS (BS k) to be selected for handover are defined by:

$$j, k = \arg\min_{m,n}(Cost(m, n))$$

For instance, in Figure 2, candidate MSs not selected are shown as shaded circular areas, while the MS selected e.g. as the one providing the best ΔCINR (i.e. CINR difference) and Load combination is selected to be "handed over" to BS2.

### Handover initiation process

In a step 104, after completing the MS and target BS selection process, the BS can initiate handover by sending a MOB-BSHO-REQ message to the MS j, indicating the BS j as target BS.

The process of the step 104 is iterated until the condition for termination of handover due to traffic load distribution are met, e.g. when radio resource utilization at the BS is below a certain threshold.

This is checked in a step 106, whose negative outcome leads to an iteration of the step 104. A positive outcome of the step 106 indicates that the condition for termination of handover due to traffic load distribution are met, and handover due to the traffic load distribution procedure terminates.

An embodiment of this disclosure foresees two features (which need not necessarily be used in combination with the MS and BS selection processes described in the foregoing) named "Sufficient QoS handover" and "Insufficient QoS handover" as described in the following. As is well known, "QoS" stands for Quality of Service.

The Sufficient QoS handover feature performs handover from coverage cells to capacity cells based on an estimation of Modulation and Coding Scheme (MCS) and Service Flow Traffic Rate that will be provided after handover. The Sufficient QoS handover feature aims at unloading inasmuch as possible the coverage cell via handover by moving traffic on cells exhibiting capacity, even if the radio conditions would be more favorable for the coverage cell. However, Sufficient QoS handover ensures that throughput degradation of connections moved from coverage cells to capacity cells stays within a certain limit, i.e. QoS is not degraded in excess of a given degradation threshold as a result of handover. In fact, the handover trigger is based on channel quality but also on estimated traffic rate and on the estimated MCS degradation due to the handover. A configurable parameter defines the maximum allowed MCS degradation.

The Insufficient QoS handover feature allows moving connections from capacity cells to coverage cells when QoS requirements can no longer be satisfied in capacity cells. The mechanisms may assume low priority values associated to coverage cells and high priority values associated to capacity cells. All neighboring cells may be ranked in a common list according to their defined priority levels.

For instance, Figure 4 refers to a simplified exemplary context with two Base Stations (cells) BS1, BS2 with a given MCS range (e.g. 1, ..., 7).

Sufficient QoS handover

The BS may require to the MS channel quality reports relative to higher priority cells. In the exemplary case considered, the radio channel conditions in the high priority cell (in this example, BS2) may be worse than in the low priority cell (in this example, BS1), so that a more robust MCS has to be used after handover.

For instance, the exemplary case may be considered of a MS who is currently attached to BS1 using MCS6 (this will be assumed to yield a very good channel condition). Conversely, it will be assumed that the estimated MCS in BS2 is equal to MCS3, which means a degradation equal to 3 deriving from possible handover.

The low priority cell (here, BS1) will initiate handover only in case MCS used on the high priority cell is in the range of acceptable degradation defined by a configurable parameter (for instance, the maximum admitted MCS degradation range is selected to be equal to 3).

Conversely, the low priority cell BS1 will not initiate the handover if the channel quality in the high priority cell (both in uplink and in downlink directions) is lower than a configurable threshold "XX_CQ_min_SuffQoS_HO" where XX = Uplink (UL) or Downlink (DL), e.g. the sensitivity CINR of the lowest MCS.

If the high priority cell radio link quality is adequate to support the requested QoS, in both the downlink and uplink directions, the connection may be handed over from low priority cells to high priority cells.

Based on reported channel quality levels, the serving BS (low priority cell) estimates the MCS and Traffic Rate that could potentially be granted to the MS if the MS was handed over to the high priority cell. The estimation takes into account both channel conditions (e.g. CINR) and Cell Load conditions at the target cell.

Cell Load conditions are intended here as percentage of available resources in the Radio Frame as defined in RRM Spare Capacity Report message of WMF Stage 3 specification. By means of this RRM message the Serving BS is aware of the Cell Load conditions at the target BS.

The threshold Max_MCS_degrad_XX (XX = UL or DL) indicates the maximum allowed MCS degradation in terms of MCS number. High MCS numbers correspond to more efficient MCS (e.g. 64QAM5/6 has highest MCS number).

Sufficient QoS Handover to the Target BS is thus triggered if certain conditions are fulfilled in both UL and in DL directions for a period longer than a given, configurable time interval "Time_to_trigger_SuffQoS_HO".

Specifically, the conditions in question may be:
Estimated Traffic Rate in target cell > Minimum Reserved Traffic Rate, (for all active service flows with guaranteed Minimum Reserved Traffic Rate);
MCS_XX(Serving BS) - MCS_XX(Target BSC ≤ Max_MCS_degrad_XX
Metric_XX (Target BS) ≥ XX_Metric_min_SuffQoS_HO
where:

XX =          DL or UL.

Metric =     CINR or RSSI

XX_Metric_min_SuffQoS_HO = configurable parameter defining minimum allowed CINR or RSSI in target cell for Sufficient QoS handover.

Such an approach, when successful, provides at least two benefits, namely:

- the resources of BS1 are made available for coverage outside BS2;
- the throughput degradation for the MS is kept within defined limits.

Insufficient QoS handover

The serving BS may require channel quality reports from the MS relative to lower priority cells. Again it will be assumed that BS2 and BS1 are the high and low priority cells, respectively.

Based on received channel quality reports the serving BS estimates the MCS and QoS that could potentially be granted to the MS if the MS were handed over to the target cell. The estimation shall take into account both channel conditions (e.g. CINR) and Cell Load conditions at the target cell.

The Insufficient QoS Handover procedure may be initiated if for any of the active Service Flows in the Serving cell the following condition is fulfilled for a period longer than a configurable time interval "InsfQoS_HO_MRTR_Avrg_Time":
Traffic Rate < Minimum Reserved Traffic Rate
(for all active Service Flows with Minimum Reserved Traffic Rate).

When the Insufficient QoS Handover procedure is initiated, the Serving BS estimates the MCS that could potentially be used by the MS if the MS were handed over to the target cell. The Serving BS also estimates the potential Traffic Rate available for the MS at the Target BS. The estimation takes into account both channel conditions (e.g. CINR) and Cell Load conditions at the target cell.

Min_MCS_improv_XX threshold (XX = UL or DL) is again a configurable parameter defining the minimum required MCS improvement in terms of MCS number due to the handover toward the low priority cell. This parameter represents a hysteresis margin for handover toward the low priority cells with the aim of avoiding ping-pong handovers. High MCS numbers correspond to more efficient MCS (e.g. 64QAM5/6 has highest MCS number).

Insufficient QoS Handover is triggered in case the following condition is fulfilled in UL and in DL for a period longer than a configurable time interval "Time_to_trigger_InsfQual_HO":

Estimated Traffic Rate in target cell > Minimum Reserved Traffic Rate,

(to be checked for all active Service Flows with Minimum Reserved Traffic Rate);

$MCS\_XX(Target\ BS) - MCS\_XX(Serving\ BS) \geq Min\_MCS\_improv\_XX$

where XX = DL or UL.

Estimation of Traffic Rate and MCS for the target cell may be accomplished in several ways. The definition of a method for traffic rate and MCS estimation is out of the scope of this disclosure since it can be achieved more or less efficiently by using known methods. For example a BS can estimate the potential MCS to be used in a target BS by using Look up Table mapping CINR to MCS and Target Cell Load to Estimated Traffic Rate.

Without prejudice to the underlying principles of the invention, the details and the embodiments may vary, even appreciably, with reference to what has been described by way of example only, without departing from the scope of the invention as defined by the annexed claims.

**Claims**

1. A method of handling handover in a communication network including mobile stations (MS) and base stations (BS1, ... , BS6) serving said mobile stations via cells, wherein a selected mobile station (MS) is handed over from a current serving cell to a selected target cell, the method **characterized in that** it includes at least one step out of:

   - selecting said mobile stations (MS) and target cells (BS1, ... , BS6) for handover as a function of combined cell load information from said cells (BS1, ..., BS6) and channel quality measurements from said mobile stations (MS);
   - allowing handover even if handover results in a degradation in terms of Modulation and Coding Scheme after handover provided the resulting degradation is within a maximum allowed degradation range.

2. The method of claim 1, wherein said selecting said mobile stations (MS) and target cells (BS1, ... , BS6) for handover involves selecting a pair of a mobile station (MS) and a target cell that minimize a handover cost associated to handover.

3. The method of claim 2, wherein said handover cost is a function of channel quality and system load, whereby the candidate mobile station (MS) associated to the lowest handover cost is moved to another cell irrespective of its position in the current serving cell.

4. The method of any of claims 1 to 3, including selecting said mobile stations (MS) out of a list of candidate mobile stations for handover, said list including mobile stations exhibiting channel quality measurements in excess of a minimum acceptable radio channel quality value.

5. The method of any of claims 1 to 4, wherein said channel quality measurements include measurements selected out of CINR and RSSI measurements.

6. The method of any of the previous claims, including the steps of:

   - sensing, for at least one given mobile station (MS) candidate for handover, the Modulation and Coding Scheme used by the current serving cell and at least one candidate target cell for handover,
   - determining said degradation in terms of Modulation and Coding Scheme after handover as a function of the difference between the Modulation and Coding Scheme used by said current serving cell and the Modulation and Coding Scheme used by said at least one candidate target cell for handover.

7. The method of claim 6, wherein said Modulation and Coding Scheme is sensed as representative of the spectral efficiency for said given mobile station (MS), whereby said given Modulation and Coding Scheme may take non-integer values.

8. The method of either of claims 6 or 7, applied to possible handover of a mobile station (MS) from a current serving cell (BS1) to a target cell (BS2) wherein said current serving cell (BS1) and said target cell (BS2) have priorities that are low and high, respectively, and channel conditions for said high priority cell (BS2) are worse than for said low priority cell (BS1), whereby a more robust Modulation and Coding Scheme is used in said high priority cell (BS2) than in said low priority cell (BS1) with consequent Modulation and Coding Scheme degradation after handover with consequent, wherein said handover is initiated only if the Modulation and Coding Scheme used in said high priority cell (BS2) cell is in a given range of acceptable degradation from the Modulation and Coding Scheme used in said low priority cell (BS1).

**9.** The method of any of the previous claims, applied to possible handover of a mobile station (MS) from a current serving cell (BS1) to a target cell (BS2) wherein said current serving cell (BS1) and said target cell (BS2) have priorities that are low and high, respectively, wherein channel conditions for said high priority cell (BS2) are worse than for said low priority cell (BS1), wherein said handover is initiated or, respectively, not initiated depending on whether the channel quality in said high priority cell (BS2) is higher or, respectively, lower than at least one given threshold in both uplink and downlink directions.

**10.** The method of claim 9, wherein said handover from a low priority current serving cell (BS1) to a high priority target cell (BS2), is initiated and triggered if, over a given period of time, in both uplink and downlink directions,

- the Estimated Traffic Rate in said high priority target cell (BS2) is higher than a minimum reserved traffic rate, for all active service flows with guaranteed Minimum Reserved Traffic Rate;
- the difference between the Modulation and Coding Schemes used in said high priority cell (BS2) and in said low priority cell (BS1) is not in excess of an acceptable degradation threshold, and
- a given channel quality metric for said high priority cell (BS2) is higher than a given quality threshold.

**11.** The method of claim 10, wherein said given channel quality metric is selected out of CINR and RSSI metrics.

**12.** The method of claim 7, applied to possible handover of a mobile station (MS) from a current serving cell (BS2) to a target cell (BS1) wherein said current serving cell (BS2) and said target cell (BS1) have priorities that are high and low, respectively, and wherein said handover is initiated if, over a given period of time, for any of the active service flows in said current serving cell (BS1), the Traffic Rate is lower than a Minimum Reserved Traffic Rate for all active Service Flows with Minimum Reserved Traffic Rate.

**13.** The method of claim 12, wherein said handover from a high priority current serving cell (BS1) to a low priority target cell (BS2), is initiated and triggered, if, over a given period of time, in both the uplink and downlink directions:

- the Estimated Traffic Rate in the target cell is higher than a Minimum Reserved Traffic Rate for all active Service Flows with Minimum Reserved Traffic Rate, and
- the difference between the Modulation and Coding Schemes used in said target cell (BS1) and in the current serving cell (BS2) is not lower than a minimum improvement threshold.

**14.** A system for handling handover in a communication network including mobile stations (MS) and base stations (BS1, ... , BS6) serving said mobile stations via cells, wherein a selected mobile station (MS) is handed over from a current serving cell to a selected target cell, the system configured for performing the method of any of claims 1 to 13.

**15.** A communication network including mobile stations (MS) and base stations (BS1, ... , BS6) serving said mobile stations via cells, the network including a handover handling system according to Claim 14.

**16.** A computer program product loadable in the memory of at least one computer and including software code portions for performing the steps of any of claims 1 to 13 when the product is run on a computer.

**Fig. 1**

Best ΔCINR and Load combination (to BS2)

**Fig. 2**

*Fig. 3*

*Fig. 4*

**European Patent Office**

## EUROPEAN SEARCH REPORT

Application Number

EP 07 42 5819

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | US 6 363 252 B1 (HAEMAELAEINEN SEPPO [FI] ET AL) 26 March 2002 (2002-03-26) <br> * abstract * <br> * column 1, lines 5-9,29-36 * <br> * column 3, line 66 - column 5, line 5 * <br> * column 8, line 52 - column 9, line 43 * <br> * claims 1,3 * | 1-16 | INV. <br> H04Q7/38 |
| Y | US 6 748 222 B1 (HASHEM BASSAM M [CA] ET AL) 8 June 2004 (2004-06-08) <br> * abstract * <br> * column 1, line 53 - column 2, line 15 * <br> * column 2, lines 45-49 * <br> * column 7, line 39 - column 9, line 32 * <br> * claim 1 * | 1-16 | |
| A | EP 1 686 821 A (LUCENT TECHNOLOGIES INC [US]; LUCENT TECHNOLOGIES NETWORK SY [DE]) 2 August 2006 (2006-08-02) <br> * paragraphs [0007], [0009], [0013], [0017], [0038] - [0040], [0043], [0044], [0059] - [0062] * <br> * abstract * <br> * claim 4; figures 3,6 * | 1-16 | TECHNICAL FIELDS SEARCHED (IPC) <br><br> H04Q |
| A | US 5 754 945 A (LIN JING-YUE [CA] ET AL) 19 May 1998 (1998-05-19) <br> * abstract * | 1-16 | |

The present search report has been drawn up for all claims

| Place of search | Date of completion of the search | Examiner |
|---|---|---|
| Munich | 13 August 2008 | Delucchi, Cecilia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 42 5819

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2008

| Patent document cited in search report | | Publication date | Patent family member(s) | | Publication date |
|---|---|---|---|---|---|
| US 6363252 | B1 | 26-03-2002 | AU | 755463 B2 | 12-12-2002 |
| | | | AU | 9267798 A | 05-04-1999 |
| | | | BR | 9803438 A | 03-11-1999 |
| | | | CA | 2304050 A1 | 25-03-1999 |
| | | | CN | 1211887 A | 24-03-1999 |
| | | | EP | 1038411 A2 | 27-09-2000 |
| | | | FI | 973718 A | 18-03-1999 |
| | | | WO | 9914972 A2 | 25-03-1999 |
| US 6748222 | B1 | 08-06-2004 | NONE | | |
| EP 1686821 | A | 02-08-2006 | CN | 1812286 A | 02-08-2006 |
| | | | JP | 2006211645 A | 10-08-2006 |
| | | | KR | 20060086812 A | 01-08-2006 |
| | | | US | 2006166677 A1 | 27-07-2006 |
| US 5754945 | A | 19-05-1998 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6363252 B